# EUROPEAN PATENT SPECIFICATION

(11) **EP 2 175 608 B1**
(45) Date of publication and mention of the grant of the patent: **09.11.2011**
(21) Application number: 09171672.0
(22) Date of filing: 29.09.2009
(51) Int. Cl.: H04L 29/06, H04L 12/28

(54) **Method of transmitting data between peers with network selection**
Verfahren zum Übertragen von Daten zwischen Peeren mit Netzauswahl
Procédé de transmission de données entre pairs avec sélection d'un réseau

(30) Priority: 10.10.2008 FR 0856894
(43) Date of publication of application: 14.04.2010
(73) Proprietor: Thomson Licensing, 92130 Issy-les-Moulineaux (FR)
(72) Inventor: Le Scouarnec, Nicolas, 92100, Boulogne Billancourt (FR); Champel, Mary-Luc, 92100, Boulogne Billancourt (FR); Jeanne, Ludovic, 92100, Boulogne Billancourt (FR)
(74) Representative: Ruellan-Lemonnier, Brigitte

(56) References cited:
- US-A1- 2006 165 068
- US-A1- 2006 256 772
- US-A1- 2008 056 208

## Description

### Technical field of the invention

The invention relates to the transmission of content data, possibly multimedia, in peer-to-peer (or P2P) mode, between peer (equipment) which can be connected, via a communication equipment, to communication networks, and in which P2P applications run.

The invention relates to all the communication networks (or infrastructures), whether wired or wireless, capable of transmitting content data (possibly multimedia) between user equipment constituting peers. Therefore, this can be a wired network, such as a global network with medium or high bitrate data transmission lines, like for instance lines of the xDSL type (for 'x Digital Subscriber Line') or cables or even optical fibres, or a global wireless network, for example of the mobile (or cellular) type, or a wireless network of the local (or proximity) type (WLAN ('Wireless Local Area Network' - IEEE 802.11a, WiFi (802.11g), ETSI HiperLAN/2), WiMAX (IEEE 802.16, ETSI HiperMAN), and Bluetooth standards).

Moreover, 'communication equipment' here means any type of equipment which can connect to at least one first wired or wireless communication network and providing access to the Internet (IP ('Internet Protocol')) and to a second wired or wireless communication network. It can therefore be, for example, a communication gateway, a residential gateway or a modem which is possibly part of a peer (equipment).

In addition, 'peer equipment' here means any type of equipment which can exchange data with other peers or network equipment, via communication equipment of the type defined above and possibly integrated. Therefore, this can be, for example, a fixed or portable computer, a fixed or mobile (or cellular) telephone, a personal digital assistant (or PDA, including a 'pocket PC') a content receiver (like, for example, a decoder, a residential gateway or a STB ('Set-Top Box')), from the moment when it has, or is coupled to, a communication equipment of the type defined above.

Finally, 'content' here means a set of data which defines a television or video or audio (radio or musical) or games or multimedia program, or a computer file (or 'data') or messages (for example, control or data messages, allowing the running of an application distributed over several peers).

### Prior art

Some P2P networks are constituted of peers which are connected (via their communication equipment) to the Internet. The data (content) transmissions between these peers are then carried out via at least one communication network providing access to the Internet, such as for example an ADSL network.

As those skilled in the art know, the bandwidth available to a peer to transmit data to at least one other peer over a link called an uplink is generally notably smaller than the one available to the same peer to receive data from another peer over a link called a downlink. Because of this technical constraint, and considering that, in a P2P network, each peer can act both as a server and as a client, the performance of a P2P network, in particular in terms of exchanged data rates, is limited by the bandwidths available to the peers for their uplinks.

An example of a such peer-to-peer network is disclosed in the prior document US2006/0256772.

So, some P2P applications, such as for example the broadcasting of video streams (which includes video on demand (or VoD), for which the contents are pre-recorded and fully available, the push-to-peer broadcast, for which contents are transmitted in advance during periods of very low traffic, and live streaming, for which the contents are broadcast live as soon as they are created), are limited by the capacities on the uplinks of the server peers and not by the capacities on the downlinks of the client peers.

### Summary of the invention

The purpose of the invention is therefore to improve the situation.

For this purpose, the invention first proposes a method dedicated to the transmission of data in peer-to-peer mode between peers capable of being connected by means of communication equipment (like, for example, modems) at least to a first communication network providing an access to the Internet and to a second communication network.

This method is characterized by the fact that it consists, when a communication application of the peer-to-peer type runs in a first peer must transmit data to at least one second peer in which the same communication application runs:
- in choosing one of the first and second networks according to at least one criterion chosen to perform the transmission, and
- in connecting the first peer, via its communication equipment, to the network which has been chosen to transmit, in peer-to-peer mode, the data of the communication application to the second peer, via this chosen network.

The method according to the invention can comprise other characteristics which can be taken individually or in combination, and in particular:
- the communication network can be chosen according to at least one criterion chosen in a group comprising at least the highest available bandwidth, a need to leave a network available, a saturation probability, the latency and a transmission cost for the network operator,
- after having chosen a network to transmit the data of a communication application of a peer, it is determined in a list of peer identifiers, in which this communication application runs, and with which the peer can communicate via the first network and/or the second network, whether the recipient peer of the data can be reached via the chosen network and, if so, the data is transmitted in peer-to-peer mode via the chosen network whereas, if not, the data is automatically transmitted in peer-to-peer mode via the first communication network,
   ➢ a list of identifiers for a peer can be constituted by interrogating other peers via the second network and/or by receiving information originating from other peers and/or a service server and/or by analysing (listening to) information transmitted by the other peers via the second network,
   ➢ for each peer, a private IP network can be constituted (with non-routable addresses) within the second network with the peers the identifiers of which belong to its identifier list and in which at least one communication application runs.

The invention also proposes a device dedicated to the management of data transmissions in peer-to-peer mode by a communication equipment of at least one peer in which at least one communication application of the peer-to-peer type runs, this equipment comprising at least one first communication module suitable for the connection to a first communication network providing access to the Internet and a second communication module suitable for the connection to a second communication network.

This device is characterised by the fact that it comprises first management means responsible for, when the communication application of the peer must transmit data to at least one other peer in which the same communication application runs:
- choosing one of the first and second networks, according to at least one chosen criterion, to perform the transmission, and
- communicating the data of the communication application to be transmitted to the communication module which can connect to the communication network which has been chosen, so that it transmits it in peer-to-peer mode to the other peer.

The device according to the invention can comprise other characteristics that can be taken separately or in combination, notably:
- the first management means can choose the communication network according to at least a criterion chosen in a group comprising at least the highest available bandwidth, a need to leave a network available, a saturation probability, the latency and a transmission cost for the network operator,
- it can comprise second management means responsible for determining, for the peer, the identifiers of the peers with which it can communicate via the second network in view of completing a list of identifiers of peers, in which the communication application runs, and with which the peer can communicate via the first network and/or via the second network. In this case, the first management means can be responsible for, after having chosen a network to transmit data of a communication application of a peer, determining in the identifier list whether the recipient peer of this data can be reached via the chosen network and, if so, to communicate the data to be transmitted to the communication module which is connected to the chosen network so that it transmits it in peer-to-peer mode via this chosen network and, if not, to communicate the data to be transmitted to the first communication module which is connected to the first network so that it transmits it in peer-to-peer mode via this first communication network,
   ➢ the second management means can be responsible for determining peer identifiers by interrogating other peers via the second network and/or by receiving information transmitted by other peers via the second communication network and/or by analysing (listening to) information transmitted by the other peers via the second network,
   ➢ the second management means can be responsible for ordering the second communication module to broadcast to the other peers, via the second communication network, an identifier of the communication application in order to wam them of the fact that this communication application is running in their peer,
   ➢ the second management means can be responsible for communicating to the first management means identifiers of peers, the equipment of which can connect to the second communication network and which were received by their peer via the second communication network, so that they can update a routing table.

The invention also proposes a communication equipment, for at least one peer, in which at least one communication application of the peer-to-peer type runs, and comprising a first communication module suitable for the connection to a first communication network providing access to the Internet, a second communication module suitable for the connection to a second communication network, and one part at least of a device for managing data transmission in peer-to-peer mode of the type of the one presented above.

The invention also proposes a peer comprising at least one communication application of the peer-to-peer type and a communication equipment of the type of the one presented above.

This peer can also comprise generation means coupled to the communication application and responsible for constituting an overlay of peers, with which their peer can communicate via the first and second communication networks, to communicate with the first management means of the device in order to provide them with data to be transmitted or to receive data that they have received and which are intended for the communication application.

Such generation means can by example be responsible for ordering the transmission to a service server, via the first communication network, of the identifiers of the peers with which their peer can exchange data via the second communication network.

The invention is particularly well suited, although not restrictively, to situations in which the first and second communication networks are respectively a global network (wired and/or wireless (possibly satellite or hybrid)) and a local (or proximity) wireless network.

### Brief description of the drawings

Other characteristics and advantages of the invention will appear upon examination of the detailed description hereafter, and the annexed drawings, wherein:
- figure 1 illustrates, very diagrammatically and functionally, a P2P network according to the invention constituted via a first wired network and a second wireless network, and
- figure 2 illustrates, very diagrammatically and functionally, the relationships existing between a peer, a communication equipment associated with this peer and with an embodiment of a management device according to the invention, and a service server.

The annexed drawings can not only serve to complete the invention, but also contribute if necessary, to its definition.

### Detailed description

The purpose of the invention is to allow the transmission in peer-to-peer mode (or P2P) of content data between peers of a P2P network constituted via at least a first communication network providing access to the Internet (by means of an IP protocol) and a second communication network in which this same IP protocol can preferably be used.

In what follows, it is considered in a non-restrictive manner that the first (communication) network is a global wired network (for example of the ADSL type) providing access to the Internet (IP) and ensuring connectivity between all the peers (equipment) of a P2P network. But, the invention is not limited to this type of first communication network. Indeed, it relates to any type of first communication network (or infrastructure) having at least one access network, wired and/or wireless, and capable of transmitting content data (possibly multimedia) between peers (equipment), via communication equipment to which the latter are coupled or that the latter comprise. Therefore, the access network can be a wired network, such as a cable or optical fibre network, or a wireless network, such as a mobile (or cellular) network or a local area network (WLAN, WiMAX and Bluetooth standards).

Moreover, it is considered in what follows, as a non-restrictive example, that the second (communication) network is a wireless local area (or proximity) network (for example of the WiFi type) using the same IP protocol as the first network R1 and providing access to certain peers of the P2P network via independent physical links between peers. But, the invention is not limited to this type of second communication network. Indeed, it relates to any type of second communication network (or infrastructure) having at least one access network, wired and/or wireless, and capable of transmitting content data (possibly multimedia) between peers (equipment), via communication equipment to which the latter are coupled or that the latter comprise. Therefore, the access network can be a wired network, such as an ADSL network, a cable network, or an optical fibre network, or a wireless network, such as a mobile (or cellular) network or a local area network (WLAN, WiMAX standards and Bluetooth).

In addition, it is considered in what follows, as a non-restrictive example, that the communication equipment (Ej) are modems which are either connected to peer (equipment) (Pi), or installed in peers (equipment) (Pi). But, the invention is not limited to this type of communication equipment. It concerns any type of equipment which can connect at least to a node of a first wired and/or wireless communication network providing access to the Internet (IP) and to a second wired or wireless communication network. Therefore, this can also be a communication gateway or a residential gateway, for example.

Lastly, we consider in what follows, as a non-restrictive example, that the peers (equipment) (Pi) are fixed or portable computers, possibly fitted with a communication equipment (Ej). But the invention is not limited to this type of peer equipment. It concerns any type of equipment capable of exchanging data with other peers or network equipment, via a communication equipment (Ej). Therefore, this can also be fixed or mobile (or cellular) telephones, personal digital assistants (or PDAs, including 'pocket PCs'), content receivers (like for example decoders, residential gateways or STBs ('Set-Top Boxes')), for example.

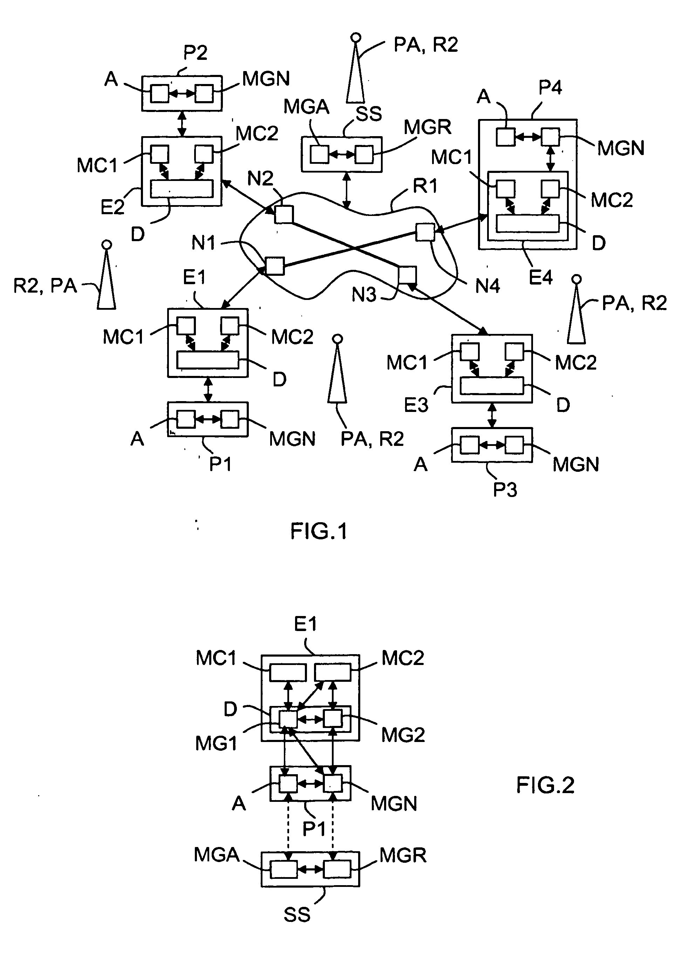

Figure 1 diagrammatically illustrates a peer-to-peer (or P2P) network constituted of peers Pi (here, computers) being capable of exchanging between them content data via their communication equipment Ej (here, modems) and via first R1 and second R2 communication networks. Index i takes here values ranging between 1 and 4, but it can take any value equal to or greater than two. Likewise, Index j takes here values ranging between 1 and 4, but it can take any value equal to or greater than two.

It will be noted that, in the illustrated non-restrictive example, each modem (or communication equipment) Ej is connected to a single peer Pi (consequently, I = j). But this is not mandatory. Several (at least two) peers Pi may indeed be connected to the same communication equipment Ej.

it will also be noted that, in the illustrated non-restrictive example, the different modems (or communication equipment) Ej are connected to communication nodes Nn (here, n = 1 to 4) different from the first network (here, of the ADSL type) R1. But this is not mandatory. Several (at least two) modems Ej may indeed be connected to the same communication node Nn.

In the case of a first network R1 of the ADSL type, the communication nodes Nn are for example DSLAMs (for Digital Subscriber Line Access Multiplexers) which provide, within a telephone exchange, the interconnection between telephone lines and an IP backbone. It will be noted that the IP routing is done within the first network R1 in other communication nodes which are located downstream of the DSLAMs and connected to the latter.

Each modem Ej comprises a first communication module MC1 which is responsible for setting up the communications with the associated communication node Nn.

The second network R2 of the WiFi type comprises access points PA to which modems Ej Can connect via waves. The latter comprise for this purpose a second communication module MC2 which is responsible for setting up communications with access points PA which are located in its neighbourhood (that is to say within radio range). It will be noted that a communication equipment Ej, even a peer Pi, may itself constitute an access point PA, especially in the case of a second ad hoc network R2 of the WiFi type (that is to say without infrastructure).

The content data which is exchanged between peers Pi within the P2P network originates from at least one contents server (not represented) within the framework of a content delivery service, such as for example a video stream delivery service (video on demand or VoD), push-to-peer, or live streaming, or a program broadcasting service (for example, television, or radio or musical programs), or a file (or data) broadcasting service, or a message broadcasting service (for example, control or data messages allowing the operation of an application distributed over several peers).

This service can for example be controlled by a service server SS by means of a P2P application management module MGA and an overlay management module MGR. This service server SS is connected to the first network R1. It is in particular responsible for constituting and updating the overlay of the P2P network by means of its overlay management module MGR.

It will be noted that, in the illustrated non-restrictive example, modems E1 to E3 are respectively external to peers P1 to P3, whereas modem E4 is part of peer P4.

The invention proposes a method capable of transmitting (content) data in peer-to-peer mode between peers Pi.

The method according to the invention comprises two main steps that are successively completed whenever a communication application A of the peer-to-peer type (P2P) being executed (or running) in a first peer (for example, P1) must transmit data over an uplink to at least one second peer (for example, P3), in which the same communication application A is running.

A first main step consists in choosing one of the first R1 and second R2 networks, to which modem E1 of first peer P1 can connect, according to at least one chosen criterion. It is for example triggered upon reception of the content data to be transmitted.

This choice of a communication network can for example be made according to at least one criterion which is chosen among at least the highest available bandwidth, a need to leave a network available, a saturation probability, the latency and a transmission cost for the network operator (in particular, as regards the bandwidth used).

It will be understood that, if the cost criterion is chosen, a choice will preferably be made to use the second network (here, of the WiFi type) R2, rather than the first network (here, of the ADSL type) R1, since the setting up of links between peers via the second network R2 has no cost for an operator.

If a criterion of the 'highest bandwidth' type is used, it will be determined, at the level of the E1 modem, which of its two uplinks via the first R1 and second R2 networks provides the highest available bandwidth at the time under consideration. In the case of a second R2 network of the WiFi type, the bandwidth is generally of about 10 Mbps whereas, in the case of a first R1 network of the ADSL type, the bandwidth is generally of about 1 Mbps. Consequently, whenever the WiFi uplink is not used by a peer Pi, or is used but can satisfy the service constraints, it will be preferable to choose it for the content (uplink) transmissions (possibly in addition to the ADSL uplink).

This first network choice step can be completed either by the modem Ej of the peer Pi which wants to transmit data to at least one other Pi' peer (i' ≠ i), or by said peer Pi. To do so, the modem Ej (or communication equipment) that the peer Pi uses to connect to one of the two R1 and R2 networks and/or the peer Pi must comprise, or be coupled to, one part at least of a data transmission management device D according to the invention.

As illustrated on figure 2, this (management) device D comprises at least one first management module MG1 which, when it receives content data that the communication application A of a peer Pi wants to transmit to at least another peer Pi', chooses one of the R1 and R2 networks according to at least one chosen criterion.

In the illustrated non-restrictive example, the device D is an integral part of the modem Ej. But this is not mandatory. Hence, its first management module MG1 could be located in the peer Pi.

In what follows, it is considered as a non-restrictive example that the chosen criterion is the highest bandwidth. Consequently, the first management module MG1 chooses among the first R1 and second R2 networks that which provides, over the uplink of the modem Ej of the peer Pi concerned, the highest bandwidth to perform this data transmission.

Once the first management module MG1 has chosen a network, two situations can occur.

Either the first network R1 has been chosen and then the (each) second recipient peer Pi' can be reached with certainty via said first network R1, and the first management module MG1 has access to a list of identifiers, which contains the identifiers of the peers Pi' with which the modem Ej of the peer Pi concerned can communicate via the first network R1 and via the second network R2 and in which the same communication application A as that which wants to transmit data in said peer Pi runs, in order to determine the identifier of the second peer Pi'.

Or the second network R2 has been chosen and then the first management module MG1 must determine in the afore-mentioned list of identifiers whether (each) second recipient peer Pi' can be reached via said second network R2. If this is the case, then the first management module MG1 maintains its choice of the second network R2. In the opposite case, the first management module MG1 is obliged to modify its choice and finally, therefore, to choose the first network R1.

It will be noted that these peer identifiers can for example be public IP addresses (and therefore routable via the first network R1) or private IP addresses (and therefore not routable (for example, of the 192.168.18.0/24 type)). It will also be noted that the same peer can, within a list of identifiers, be associated with a public IP address, assigned by the first network R1, and with a private IP address, assigned by the peer Pi considered (as will be seen further on) and usable via the second network R2.

This list of identifiers is for example stored in an overlay generation module MGN of the peer Pi concerned. It can for example be constituted by the overlay generation module MGN of the peer Pi concerned from information which originates from other Pi' peers and/or the service server SS.

The information which originates from the other Pi' peers can for example be given to the overlay generation module MGN by a second management module MG2 of the device D which is preferably located in the modem Ej of a peer Pi (as illustrated in figure 2) but which, as a variant, could be located in the peer Pi.

More precisely, the second management module MG2 of a device D associated with a modem Ej can for example interrogate other peers Pi' via the access points PA of the second network R2 in order to determine if their modems Ej' can exchange data with its own modem Ej via the second network R2. It can also analyse the messages that are possibly received by the second communication module MC2 and which originate from the other peers Pi' via the second network R2. It can also listen to the messages which are exchanged between peers Pi' over the second network R2.

These messages can for example be generated, possibly periodically, by the second management module MG2 of the device D which is associated with the modem Ej of a peer Pi. They each comprise the identifier of the peer Pi in which a communication application A runs, as well as possibly the identifier of the latter (A) when the peer Pi has several communication applications coupled to the same overlay generation module MGN.

The identifier of a communication application A running in a peer Pi is for example given to the second management module MG2, of the device D which is associated with a modem Ej of this peer Pi, by the overlay generation module MGN of the peer Pi, during a recording phase.

The second management module MG2 of a modem Ej of a peer Pi can thus communicate, to the overlay generation module MGN of this peer Pi, each pair of peer identifier and application identifier received so that it completes a list of identifiers for its own peer Pi.

In brief, a list of identifiers of a peer Pi is constituted by the overlay generation module MGN of a peer (which is therefore suitable for this purpose in comparison with those equipping the peers of the prior art) and comprises the list of identifiers of the other peers Pi' of the network P2P with which said peer Pi can communicate in P2P via the first network R1 and/or via the second network R2.

The identifiers of the other peers Pi' of the P2P network with which said peer Pi can communicate in P2P via the first network R1 are for example public IP addresses which are for example given by the overlay management module MGR of the service server SS via the Internet (and therefore via the first network R1 and via the modem Ej).

The identifiers of the other peers Pi' of the P2P network with which the peer Pi can communicate in P2P via the second network R2 are for example private IP addresses which are for example assigned by the overlay generation module MGN to the peers Pi' which have been detected in its neighbourhood by the second management module MG2 associated with this peer Pi. The notion of neighbourhood (or proximity) must be understood here in the physical sense of the term and not in the logical sense.

The peers to which an overlay generation module MGN assigns a private IP address (or identifiers) constitute together a kind of private IP network which can be exclusively dedicated to a communication application A.

It will be noted that the overlay generation module MGN of a peer Pi can possibly be responsible for giving to the overlay management module MGR of the service server SS, for example via the first communication module MC1 of its modem Ej and via the first network R1, at least the part of the list of identifiers of its own peer Pi that comprises the public identifiers (public IP addresses). Thus, the overlay management module MGR can update the global overlay of the P2P network that it controls and send, to the different peers Pi of the latter, the list of the public identifiers of the peers with which it is meant to be able to exchange data.

The second main step of the process according to the invention begins after the final choice of the network (the one which satisfies each chosen criterion (by example, the one which provides the highest bandwidth) at the time under consideration, or the one which is the only one to allow a communication with the second recipient peer Pi').

This second main step consists in connecting the first peer (here, P1), via its modem (here, E1), to the network which has been finally chosen (for example, R2) to transmit in peer-to-peer mode the data of the communication application A to the second peer (here, P3), via this chosen network R2.

This second step is preferentially controlled by the first management module MG1 of the device D associated with the modem Ej concerned. More precisely, when the first management module MG1 has definitively chosen the network which must be used for the transmission of the data that it has previously received in the form of IP packets, it looks at the destination address which is contained in the header of the IP packets and routes the latter to the communication module MC1 or MC2 of the modem Ej which is connected to the chosen network so that they reach the level of the second recipient peer Pi'.

It will be noted that the routing table, which is used by a first management module MG1, contains, like any IP routing table, a default route (Internet) and particular routes specific to certain subnetworks of the secondary network R2.

This routing table is preferentially updated by the first management module MG1 with information which can be given to it by the second management module MG2 and which contain the identifiers of the peers Pi' newly identified with which its modem Ej can from now on communicate via the second network R2.

It will also be noted that the first management module MG1, before routing IP packets to the second network R2, can possibly check that the original IP address (of the peer Pi) actually corresponds to a peer which has recorded with the second management module MG2.

It will also be noted that the management device D according to the invention can be realized in the form of software modules. In particular, the first management module MG1 can use techniques of the Firewall, NAT (Network Translation Address) and IP routing type. But the management device D can also be realized partly or fully in the form of hardware circuits or a combination of software modules and hardware circuits.

In what precedes, we have described an example of embodiment of a management device D according to the invention fully located in a communication equipment Ej associated with a peer Pi. But, such a device D could be partly located in the communication equipment Ej (for example, concerning its second management module MG2) and partly located in the peer Pi (for example, concerning its first management module MG1).

With the invention, some at least of the P2P applications can have access to local area (or proximity) networks, for example of the WiFi type, thus making it possible to relieve the Internet link and to discover neighbouring (or close) peers in the radio sense of the term.

Hence, when a client peer searches a server peer likely to give it a part at least of a content, it can for example start its search with the neighbours with which it can communicate via the second network R2. If a neighbouring peer can satisfy it, it will then immediately transmit to it the required content data via the second network. However, if none of them can satisfy it, then it starts its search again with peers that can only be reached via the first network and, if the latter peers still cannot satisfy it, it starts its search again with the content server.

Moreover, in the case of a service of the push-to-peer type, contents can for example be broadcast in advance to the peer or peers via the first network R1, during periods of very low traffic. Once a content is stored in a peer, it can then either use it or transmit it to requesting client peers via the second network if this is possible at the time under consideration. It will be understood that the invention makes it possible to transfer, in advance, many more contents to the peers and thus to reduce the load of the content servers. In fact, if peers cannot download, as quickly as they display, a content of the video type, at which they are almost certain to look, then the content will be pushed towards these peers and, with the proximity, radio link (for example, WiFi), it is sure that it is sufficient to transmit a content to a peer so that its neighbours can download it quickly enough. Hence, for a group of three peers, we can only load a video once, which leaves storage space to put other videos.

Generally, the invention makes it possible for a server peer to serve more client peers since it now has two uplinks to serve them simultaneously. It also makes it possible for a server peer, of which the uplink on the first network R1 is overloaded, to request another peer to help it to transfer content data to a client peer which can only be reached by the first network R1. More precisely, the server peer will transfer data, via the second network R2, to the server called for help and whose uplink on the first network R1 is not overloaded, so that the latter server transfers it in its turn to the final recipient client peer via the first network R1. In the same manner, a peer whose downlink bandwidth is saturated will be in a position to request a neighbouring peer, via the second network R2, to help it.

The invention is not limited to the embodiments of the management device, communication equipment, peer and transmission method described above, -only as an example, but it encompasses all the -variants that those skilled in the art can envisage within the framework of the claims hereinafter.

## Claims

1. Data transmission method in peer-to-peer mode between peers (Pi) capable of being connected by means of communications equipment (Ej) to at least a first communication network (R1) providing access to the Internet and a second communication network (R2), said transmission method comprising the steps of i) when a communication application of the peer-to-peer type (A) running in a first peer (Pi) must transmit data to at least one second peer (Pi') in which the same communication application (A) is running, choosing one of said first (R1) and second (R2) networks according to at least one chosen criterion to perform said transmission, and
ii) connecting said first peer (Pi), via its equipment (Ej), to said network chosen to transmit said data in peer-to-peer mode to said second peer (Pi'), via this chosen network;
and
iii) after having chosen a network (R1, R2) to transmit data of a communication application (A) of a peer (Pi), determining in a list of identifiers of peers (Pi'), in which said communication application (A) runs and with which said peer (Pi) can communicate via said first network (R1) and/or via said second network (R2), whether the recipient peer (Pi') of said data can be reached via said chosen network and, iv) carrying out said
data transmission in peer-to-peer mode via the chosen network,
whereas, if not, automatically transmitting said data in peer-to-peer mode via said first communication network (R1).

2. Method according to claim 1, **characterized in that** said communication network (R1, R2) is chosen according to at least one criterion chosen from a group comprising at least the highest available bandwidth, a need to leave a network available, a saturation probability, the latency and a transmission cost for the network operator.

3. Method according to claim 1, **characterized in that** a list of identifiers for a peer (Pi) is constituted by interrogating other peers (Pi') via said second network (R2) and/or by receiving information originating from other peers (Pi') and/or a service server (SS) and/or by analysing information transmitted by the other peers via said second network (R2).

4. Method according to one of claims 1, 2 and 3, **characterized in that** for each peer (Pi), a private IP network is constituted within said second network (R2) with the peers (Pi') the identifiers of which belong to its identifier list and in which said communication application (A) runs.

5. Device (D) for managing data transmission in peer-to-peer mode for a communication equipment (Ej) of at least one peer (Pi) in which at least one communication application of the peer-to-peer type (A) is run, said equipment (Ej) comprising at least one first communication module (MC1) suitable for connection to a first communication network (R1) providing access to the Internet and a second communication module (MC2) suitable for connection to a second communication network (R2), wherein said device comprises first management means (MG1) adapted, when said communication application (A) must transmit data to at least one other peer (Pi') in which the same communication application (A) runs, i) to choose one of said first (R1) and second (R2) networks according to at least one chosen criterion, to perform said transmission, and ii) to communicate said data to be transmitted to the communication module (MC1, MC2) which can connect to said communication network (R1, R2) chosen so that it transmits it in peer-to-peer mode to said other peer (Pi'),
and said device further comprises second management means (MG2) arranged to determine for said peer (Pi) the identifiers of the peers (Pi') with which it can communicate via said second network (R2), by completing a list of identifiers of peers (Pi'), in which said communication application (A) runs, and with which said peer (Pi) can communicate via said first network (R1) and/or via said second network (R2), and wherein said first management means (MG1) are adapted, after having chosen a network (R1, R2) to transmit data of a communication application (A) of a peer (Pi), to determine in said list of identifiers whether the recipient peer (Pi') of said data can be reached via said chosen network and, if so, to communicate said data to be transmitted to said communication module (MC1, MC2) connected to said chosen network so that it transmits it in peer-to-peer mode via the chosen network and, if not, to communicate said data to be transmitted to said first communication module (MC1) connected to said first network (R1) so that it transmits it in peer-to-peer mode via said first communication network (R1).

6. Device according to claim 5, **characterized in that** said first management means (MG1) are adapted to choose said communication network (R1, R2) according to at least one criterion chosen from a group comprising the highest available bandwidth, a need to leave a network available, a saturation probability, the latency and a transmission cost for the network operator.

7. Device according to claim 5, **characterized in that** said second management means (MG2) are adapted to determine identifiers of peers (Pi') by interrogating other peers (Pi') via said second network (R2) and/or by receiving information transmitted by other peers (Pi') via said second communication network (R2) and/or by analysing information transmitted by the other peers (Pi') via said second network (R2).

8. Device according to one of claims 5, 6 and 7, **characterized in that** said second management means (MG2) are adapted to order said second communication module (MC2) to broadcast to the other peers (Pi'), via said second communication network (R2), an identifier of said communication application so as to warn them of the fact that this communication application runs in said peer (Pi).

9. Device according to one of claims 5 to 8, **characterized in that** said second management means (MG2) are adapted to communicate to said first management means (MG1) identifiers of peers (Pi') of which the equipment (Ei') can connect to said second communication network (R2), and which were received by said peer (Pi) via said second communication network (R2), so that they can update a routing table.

10. Communication equipment (Ej) for at least one peer (Pi) in which at least one communication application of the peer-to-peer type (A) is running, said equipment (Ej) comprising at least one first communication module (MC1) suitable for connection to a first communication network (R1) providing access to the internet and a second communication module (MC2) suitable for connection to a second communication network (R2), said equipment further comprising one part at least a device for managing data transmission in peer-to-peer mode (D) according to one of claims 5 to 9.

11. Peer (Pi) comprising at least one communication application of the peer-to-peer type (A), and further comprising a communication equipment (Ej) according to claim 10.

12. Peer according to claim 11, **characterized in that** it comprises generation means (MGN) coupled to said communication application (A) and adapted to constitute an overlay of peers (Pi') with which said peer (Pi) can communicate via said first (R1) and second (R2) communication networks, to communicate with said first management means (MG1) of device (D) to provide them with data to be transmitted or to receive data that they have received and that are intended for said communication application (A).

13. Peer according to claim 12, **characterized in that** said generation means (MGN) are adapted to order the transmission to a service server (SS), via said first communication network (R1), of the identifiers of peers (Pi') with which said peer (Pi) can exchange data via said second communication network (R2).

14. Use of the data transmission method according to one of claims 1 to 4, of the device for managing data transmission in peer-to-peer mode (D) according to one of claims 5 to 9, of the communication equipment (Ej) according to claim 10, and of the peer (Pi) according to one of claims 11 to 13, in the case of a first global communication network (R1) of the wired and/or wireless type and a second local communication network (R2) of the wireless type.

## Patentansprüche

1. Datenübertragungsverfahren in einer Peer-to-Peer-Betriebsart zwischen Peeren (Pi), die mittels Kommunikationsausrüstung (Ej) mit mindestens einem ersten Kommunikationsnetz (R1), das Zugang zum Internet bereitstellt, und mit einem zweiten Kommunikationsnetz (R2) verbunden werden können, wobei das Übertragungsverfahren die folgenden Schritte umfasst:
i) wenn eine Kommunikationsanwendung (A) des Peer-to-Peer-Typs, die in einem ersten Peer (Pi) ausgeführt wird, Daten an mindestens einen zweiten Peer (Pi'), in dem dieselbe Kommunikationsanwendung (A) ausgeführt wird, übertragen muss, Wählen des ersten (R1) oder des zweiten (R2) Netzes in Übereinstimmung mit mindestens einem gewählten Kriterium zum Ausführen der Übertragung, und
ii) Verbinden des ersten Peers (Pi) über seine Ausrüstung (Ej) mit dem gewählten Netz, um die Daten in der Peer-to-Peer-Betriebsart über dieses gewählte Netz an den zweiten Peer (Pi') zu übertragen; und
iii) nachdem ein Netz (R1, R2) zum Übertragen von Daten einer Kommunikationsanwendung (A) eines Peers (Pi) gewählt worden ist, Bestimmen in einer Liste von Identifizierern von Peers (Pi'), in denen die Kommunikationsanwendung (A) ausgeführt wird und mit denen der Peer (Pi) über das erste Netz (R1) und/oder über das zweite Netz (R2) kommunizieren kann, ob der Empfänger-Peer (Pi') der Daten über das gewählte Netz erreichbar ist, und
iv) wenn das der Fall ist, Ausführen der Datenübertragung in der Peer-to-Peer-Betriebsart über das gewählte Netz,
v) wenn das dagegen nicht der Fall ist, automatisches Übertragen der Daten in der Peer-to-Peer-Betriebsart über das erste Kommunikationsnetz (R1).

2. Verfahren nach Anspruch 1, **dadurch gekennzeichnet, dass** das Kommunikationsnetz (R1, R2) in Übereinstimmung mit mindestens einem Kriterium gewählt wird, das aus einer Gruppe gewählt wird, die die höchste verfügbare Bandbreite und/oder eine Notwendigkeit, ein Netz verfügbar zu lassen, und/oder eine Sättigungswahrscheinlichkeit und/oder die Latenzzeit und/oder Übertragungskosten für den Netzbetreiber umfasst.

3. Verfahren nach Anspruch 1, **dadurch gekennzeichnet, dass** eine Liste von Identifizierern für einen Peer (Pi) durch Abfragen anderer Peere (Pi') über das zweite Netz (R2) und/oder durch Empfangen von von anderen Peeren (Pi') und/oder von einem Dienstserver (SS) ausgehenden Informationen und/oder durch Analysieren von von den anderen Peeren über das zweite Netz (R2) übertragenen Informationen gebildet wird.

4. Verfahren nach einem der Ansprüche 1, 2 und 3, **dadurch gekennzeichnet, dass** für jeden Peer (Pi) ein privates IP-Netz ausgeführt wird, innerhalb dessen das zweite Netz (R2) mit denjenigen Peeren (Pi') gebildet ist, deren Identifizierer zu seiner Identifiziererliste gehören und in denen die Kommunikationsanwendung (A) ausgeführt wird.

5. Vorrichtung (D) zum Managen der Datenübertragung in einer Peer-to-Peer-Betriebsart für eine Kommunikationsausrüstung (Ej) mindestens eines Peers (Pi), in dem mindestens eine Kommunikationsanwendung des Peer-to-Peer-Typs (A) ausgeführt wird, wobei die Ausrüstung (Ej) mindestens ein erstes Kommunikationsmodul (MC1), das für die Verbindung mit einem ersten Kommunikationsnetz (R1) geeignet ist, das einen Zugang zum Internet bereitstellt, und ein zweites Kommunikationsmodul (MC2), das zur Verbindung mit einem zweiten Kommunikationsnetz (R2) geeignet ist, umfasst, wobei die Vorrichtung erste Managementmittel (MG1) umfasst, die dafür ausgelegt sind, wenn die Kommunikationsanwendung (A) Daten an mindestens einen anderen Peer (Pi') übertragen muss, in dem dieselbe Kommunikationsanwendung (A) ausgeführt wird, i) in Übereinstimmung mit mindestens einem gewählten Kriterium das erste (R1) oder das zweite (R2) Netz zu wählen, um die Übertragung auszuführen, und ii) die Daten, die an das Kommunikationsmodul (MC1, MC2), das mit dem gewählten Kommunikationsnetz (R1, R2) verbinden kann, übertragen werden sollen, so zu übermitteln, damit es sie in der Peer-to-Peer-Betriebsart an den anderen Peer (Pi') überträgt,
und wobei die Vorrichtung ferner zweite Managementmittel (MG2) umfasst, die dafür ausgelegt sind, für den Peer (Pi) die Identifizierer derjenigen Peere (Pi'), mit denen er über das zweite Netz (R2) kommunizieren kann, durch Ausfüllen einer Liste von Identifizierern von Peeren (Pi'), in denen die Kommunikationsanwendung (A) ausgeführt wird und mit denen der Peer (Pi) über das erste Netz (R1) und/oder über das zweite Netz (R2) kommunizieren kann, zu bestimmen, und wobei die ersten Managementmittel (MG1) dafür ausgelegt sind, nachdem ein Netz (R1, R2) zum Übertragen von Daten einer Kommunikationsanwendung (A) eines Peers (Pi) gewählt worden ist, in der Liste der Identifizierer zu bestimmen, ob der Empfänger-Peer (Pi') der Daten über das gewählte Netz erreichbar ist, und wenn das der Fall ist, die zu übertragenden Daten an das Kommunikationsmodul (MC1, MC2) zu übermitteln, das mit dem gewählten Netz verbunden ist, sodass es sie in der Peer-to-Peer-Betriebsart über das gewählte Netz überträgt, und wenn das nicht der Fall ist, die zu übertragenden Daten an das erste Kommunikationsmodul (MC1) zu übermitteln, das mit dem ersten Netz (R1) verbunden ist, sodass es sie in der Peer-to-Peer-Betriebsart über das erste Kommunikationsnetz (R1) überträgt.

6. Vorrichtung nach Anspruch 5, **dadurch gekennzeichnet, dass** die ersten Managementmittel (MG1) zum Wählen des Kommunikationsnetzes (R1, R2) in Übereinstimmung mit mindestens einem Kriterium ausgelegt sind, das aus einer Gruppe gewählt ist, die die höchste verfügbare Bandbreite und/oder eine Notwendigkeit, ein Netz verfügbar zu lassen, und/oder eine Sättigungswahrscheinlichkeit und/oder die Latenzzeit und/oder Übertragungskosten für die Netzbetreiber umfasst.

7. Vorrichtung nach Anspruch 5, **dadurch gekennzeichnet, dass** die zweiten Managementmittel (MG2) zum Bestimmen von Identifizierern von Peeren (Pi') durch Abfragen anderer Peere (Pi') über das zweite Netz (R2) und/oder durch Empfangen von von anderen Peeren (Pi') über das zweite Kommunikationsnetz (R2) übertragenen Informationen und/oder durch Analysieren von von den anderen Peeren (Pi') über das zweite Netz (R2) übertragenen Informationen ausgelegt sind.

8. Vorrichtung nach einem der Ansprüche 5, 6 und 7, **dadurch gekennzeichnet, dass** die zweiten Managementmittel (MG2) dafür ausgelegt sind anzuordnen, dass das zweite Kommunikationsmodul (MC2) über das zweite Kommunikationsnetz (R2) einen Identifizierer der Kommunikationsanwendung an die anderen Peere (Pi') rundsendet, um sie auf die Tatsache hinzuweisen, dass diese Kommunikationsanwendung in dem Peer (Pi) ausgeführt wird.

9. Vorrichtung nach einem der Ansprüche 5 bis 8, **dadurch gekennzeichnet, dass** die zweiten Managementmittel (MG2) zum Übermitteln von Identifizierern von Peeren (Pi'), deren Ausrüstung (Ei') mit dem zweiten Kommunikationsnetz (R2) verbinden kann, und die von dem Peer (Pi) über das zweite Kommunikationsnetz (R2) empfangen wurden, an die ersten Managementmittel (MG1), sodass sie eine Leitwegtabelle aktualisieren können, ausgelegt sind.

10. Kommunikationsausrüstung (Ej) für mindestens einen Peer (Pi), in dem mindestens eine Kommunikationsanwendung des Peer-to-Peer-Typs (A) ausgeführt wird, wobei die Ausrüstung (Ej) mindestens ein erstes Kommunikationsmodul (MC1), das zur Verbindung mit einem ersten Kommunikationsnetz (R1), das Zugang zum Internet bereitstellt, geeignet ist, und mit einem zweiten Kommunikationsmodul (MC2), das zur Verbindung mit einem zweiten Kommunikationsnetz (R2) geeignet ist, umfasst, wobei die Ausrüstung ferner mindestens eine Vorrichtung zum Managen der Datenübertragung in der Peer-to-Peer-Betriebsart (D) in Übereinstimmung mit einem der Ansprüche 5 bis 9 umfasst.

11. Peer (Pi), der mindestens eine Kommunikationsanwendung des Peer-to-Peer-Typs (A) umfasst und der ferner eine Kommunikationsausrüstung (Ej) in Übereinstimmung mit Anspruch 10 umfasst.

12. Peer nach Anspruch 11, **dadurch gekennzeichnet, dass** er Erzeugungsmittel (MGN) umfasst, die mit der Kommunikationsanwendung (A) gekoppelt sind und die zum Bilden einer Überlagerung von Peeren (Pi'), mit denen der Peer (Pi) über das erste (R1) und über das zweite (R2) Kommunikationsnetz kommunizieren kann, ausgelegt sind, um mit den ersten Managementmitteln (MG1) der Vorrichtung (D) zu kommunizieren, um für sie zu sendende Daten oder zu empfangende Daten, die sie empfangen haben und die für die Kommunikationsanwendung (A) bestimmt sind, bereitzustellen.

13. Peer nach Anspruch 12, **dadurch gekennzeichnet, dass** die Erzeugungsmittel (MGN) dafür ausgelegt sind, die Übertragung der Identifizierer von Peeren (Pi'), mit denen der Peer (Pi) Daten über das zweite Kommunikationsnetz (R2) austauschen kann, über das erste Kommunikationsnetz (R1) an einen Dienstserver (SS) anzuordnen.

14. Verwendung des Datenübertragungsverfahrens nach einem der Ansprüche 1 bis 4, der Vorrichtung zum Managen der Datenübertragung in einer Peer-to-Peer-Betriebsart (D) in Übereinstimmung mit einem der Ansprüche 5 bis 9, der Kommunikationsausrüstung (Ej) in Übereinstimmung mit Anspruch 10 und des Peers (Pi) in Übereinstimmung mit den Ansprüchen 11 bis 13 im Fall eines ersten, globalen Kommunikationsnetzes (R1) des verdrahteten und/oder drahtlosen Typs und eines zweiten, lokalen Kommunikationsnetzes (R2) des drahtlosen Typs.

## Revendications

1. Procédé de transmission de données en mode pair à pair entre des pairs (Pi) pouvant se connecter au moyen d'équipements de communication (Ej) à au moins un premier réseau de communication (R1) offrant un accès à l'Internet et un second réseau de communication (R2), ledit procédé de communication comportant les étapes de :
i) lorsqu'une application de communication de type pair à pair (A) s'exécutant dans un premier pair (Pi) doit transmettre des données à au moins un second pair (Pi') dans lequel s'exécute cette même application de communication (A), choisir l'un desdits premier (R1) et second (R2) réseaux en fonction d'au moins un critère choisi pour effectuer ladite transmission, et
ii) connecter ledit premier pair (Pi), via son équipement (Ej), audit réseau choisi pour transmettre lesdites données en mode pair à pair audit second pair (Pi'), via ce réseau choisi,
iii) après avoir choisi un réseau (R1, R2) pour transmettre des données d'une application de communication (A) d'un pair (Pi), déterminer dans une liste d'identifiants de pairs (Pi'), dans lesquels s'exécute ladite application de communication (A) et avec lesquels ledit pair (Pi) peut communiquer via ledit premier réseau (R1) et/ou via ledit second réseau (R2), si le pair (Pi') destinataire desdites données peut être joint via ledit réseau choisi, et
iv) dans l'affirmative effectuer ladite transmission des données en mode pair à pair via le réseau choisi,
v) tandis que dans la négative, transmettre automatiquement lesdites données en mode pair à pair via ledit premier réseau de communication (R1).

2. Procédé selon la revendication 1, **caractérisé en ce que** l'on choisit ledit réseau de communication (R1, R2) en fonction d'au moins un critère choisi dans un groupe comprenant la bande passante disponible la plus grande, un besoin de laisser disponible un réseau, une probabilité de saturation, la latence et un coût de transmission pour l'opérateur du réseau.

3. Procédé selon la revendication 1, **caractérisé en ce que** l'on constitue une liste d'identifiants d'un pair (Pi) par interrogation d'autres pairs (Pi') via ledit second réseau (R2) et/ou par réception d'informations issues d'autres pairs (Pi') et/ou d'un serveur de service (SS) et/ou par analyse d'informations transmises par les autres pairs via ledit second réseau (R2).

4. Procédé selon l'une des revendications 1, 2 et 3, **caractérisé en ce que** pour chaque pair (Pi) l'on constitue un réseau IP privé au sein dudit second réseau (R2) avec les pairs (Pi') dont les identifiants appartiennent à sa liste d'identifiants et dans lesquels s'exécute ladite application de communication (A).

5. Dispositif (D) de gestion de transmission de données en mode pair à pair pour un équipement de communication (Ej) d'au moins un pair (Pi) dans lequel s'exécute au moins une application de communication de type pair à pair (A), ledit équipement (Ej) comprenant au moins un premier module de communication (MC1) propre à se connecter à un premier réseau de communication (R1) offrant un accès à l'Internet et un second module de communication (MC2) propre à se connecter à un second réseau de communication (R2), dans lequel le dispositif comprend des premiers moyens de gestion (MG1) agencés, lorsque ladite application de communication (A) doit transmettre des données à au moins un autre pair (Pi') dans lequel s'exécute cette même application de communication (A), i) à choisir l'un desdits premier (R1) et second (R2) réseaux en fonction d'au moins un critère choisi, pour effectuer ladite transmission, et ii) à communiquer lesdites données à transmettre au module de communication (MC1, MC2) qui peut se connecter audit réseau de communication (R1, R2) choisi afin qu'il les transmette en mode pair à pair audit autre pair (Pi'), et ledit dispositif comprend de plus des seconds moyens de gestion (MG2) agencés pour déterminer pour ledit pair (Pi) les identifiants des pairs (Pi') avec lesquels il peut communiquer via ledit second réseau (R2), en complétant une liste d'identifiants de pairs (Pi'), dans lesquels s'exécute ladite application de communication (A) et avec lesquels ledit pair (Pi) peut communiquer via ledit premier réseau (R1) et/ou via ledit second réseau (R2), et dans lequel lesdits premiers moyens de gestion (MG1) sont agencés, après avoir choisi un réseau (R1, R2) pour transmettre des données d'une application de communication (A) d'un pair (Pi), pour déterminer dans ladite liste d'identifiants si le pair (Pi') destinataire desdites données peut être joint via ledit réseau choisi, et dans l'affirmative pour communiquer lesdites données à transmettre audit module de communication (MC1, MC2) connecté audit réseau choisi afin qu'il les transmette en mode pair à pair via le réseau choisi, et dans la négative pour communiquer lesdites données à transmettre audit premier module de communication (MC1) connecté audit premier réseau (R1) afin qu'il les transmette en mode pair à pair via ledit premier réseau de communication (R1).

6. Dispositif selon la revendication 5, **caractérisé en ce que** lesdits premiers moyens de gestion (MG1) sont agencés pour choisir ledit réseau de communication (R1, R2) en fonction d'au moins un critère choisi dans un groupe comprenant la bande passante disponible la plus grande, un besoin de laisser disponible un réseau, une probabilité de saturation, la latence et un coût de transmission pour l'opérateur du réseau.

7. Dispositif selon la revendication 5, **caractérisé en ce que** lesdits seconds moyens de gestion (MG2) sont agencés pour déterminer des identifiants de pairs (Pi') par interrogation d'autres pairs (Pi') via ledit second réseau (R2) et/ou par réception d'informations transmises par d'autres pairs (Pi') via ledit second réseau de communication (R2) et/ou par analyse d'informations transmises par les autres pairs (Pi') via ledit second réseau (R2).

8. Dispositif selon l'une des revendications 5, 6 et 7, **caractérisé en ce que** lesdits seconds moyens de gestion (MG2) sont agencés pour ordonner audit second module de communication (MC2) de diffuser vers les autres pairs (Pi'), via ledit second réseau de communication (R2), un identifiant de ladite application de communication de manière à les avertir du fait que cette application de communication s'exécute dans ledit pair (Pi).

9. Dispositif selon l'une des revendications 5 à 8, **caractérisé en ce que** lesdits seconds moyens de gestion (MG2) sont agencés pour communiquer auxdits premiers moyens de gestion (MG1) des identifiants de pairs (Pi') dont les équipements (Ei') peuvent se connecter audit second réseau de communication (R2) et qui ont été reçus par ledit pair (Pi) via ledit second réseau de communication (R2), de sorte qu'ils puissent mettre à jour une table de routage.

10. Equipement de communication (Ej) pour au moins un pair (Pi) dans lequel s'exécute au moins une application de communication de type pair à pair (A), ledit équipement (Ej) comprenant au moins un premier module de communication (MC1) propre à se connecter à un premier réseau de communication (R1) offrant un accès à l'Internet et un second module de communication (MC2) propre à se connecter à un second réseau de communication (R2), ledit équipement comprenant en outre une partie au moins d'un dispositif de gestion de transmission de données en mode pair à pair (D) selon l'une des revendications 5 à 9.

11. Pair (Pi) comprenant au moins une application de communication de type pair à pair (A), et comprenant en outre un équipement de communication (Ej) selon la revendication 10.

12. Pair selon la revendication 11, **caractérisé en ce qu'**il comprend des moyens de génération (MGN) couplés à ladite application de communication (A) et agencés pour constituer un réseau logique de pairs (Pi') avec lesquels ledit pair (Pi) peut communiquer via lesdits premier (R1) et second (R2) réseaux de communication, pour communiquer avec lesdits premier moyens de gestion (MG1) du dispositif (D) afin de leur fournir des données à transmettre ou de recevoir des données qu'ils ont reçues et qui sont destinées à ladite application de communication (A).

13. Pair selon la revendication 12, **caractérisé en ce que** lesdits moyens de génération (MGN) sont agencés pour ordonner la transmission à un serveur de service (SS), via ledit premier réseau de communication (R1), des identifiants des pairs (Pi') avec lesquels ledit pair (Pi) peut échanger des données via ledit second réseau de communication (R2).

14. Utilisation du procédé de transmission de données selon l'une des revendications 1 à 4, du dispositif de gestion de transmission de données en mode pair à pair (D) selon l'une des revendications 5 à 9, de l'équipement de communication (Ej) selon la revendication 10, et du pair (Pi) selon l'une des revendications 11 à 13, dans le cas d'un premier réseau de communication (R1) global et de type filaire et/ou non filaire et d'un second réseau de communication (R2) local et de type non filaire.
